# EUROPEAN PATENT SPECIFICATION

(11) **EP 0 891 979 B1**
(45) Date of publication and mention of the grant of the patent: **20.10.2004**
(21) Application number: 98112880.4
(22) Date of filing: 10.07.1998
(51) Int. Cl.: C07F 9/38, A61K 31/66

(54) **A crystalline form of monohydrate monosodium salt of the N,N-Dimethyl-3-amino-1-Hydroxypropan-1,1-Disphosphonic acid and the procedure for its preparation**
Kristalline Form von N,N-dimethyl-3-amino-1-hydroxypropan-1,1-Diphosphonsäure Mononatriumsalz Monohydrat und ein Verfahren zu ihrer Herstellung
Une forme cristalline du monohydrate du sel monosodique de l'acide N,N-diméthyl-3-amino-1-hydroxypropane-1,1-diphosphonique

(30) Priority: 15.07.1997 AR 10315597
(43) Date of publication of application: 20.01.1999
(73) Proprietor: GADOR S.A., Buenos Aires 1414 (AR)
(72) Inventor: Vecchioli, Adriana, c/o Gador S.A., 1916 Pilar, Pcia. Buenos Aires (AR); Labriola, Rafael, c/o Gador S.A., 1916 Pilar, Pcia. Buenos Aires (AR)
(74) Representative: Winkler, Andreas, Dr.

(56) References cited:
- EP-A- 0 177 443
- WO-A-96/19998
- L. M. SHKOL'NIKOVA: "Crystal and molecular structure of alpha-hydroxy-gamma-N,N-dimethylaminopropy lidenediphosphonic acid, a regulator of calcium metabolism" BULLETIN OF THE ACADEMY OF SCIENCES OF THE USSR. DIVISION OF CHEMICAL SCIENCE., vol. 36, no. 7(1), July 1987, pages 1394-1399, XP002081062 NEW YORK US
- VEGA D ET AL: "Monosodium 3-(dimethylammonio)-1-hydroxy-1,1-propaned iyldiphosphon ate monohydrate (monosodium olpadronate monohydrate)" ACTA CRYSTALLOGR., SECT. C: CRYST. STRUCT. COMMUN. (ACSCEE,01082701);98; VOL.C54 (3); PP.324-327, XP002081063 Comision nacional de Energia Atomica;Dep. Fisica; Buenos Aires; Argent. (AR)

## Description

The N, N-dimethyl-3-amino-1-hydroxypropan-1,1-diphosphonic acid, generical name olpadronic acid, belongs to the biphosphonate family.

Several members of this family are used for the treatment of diseases associated with a dysfunction of the calcium metabolism, in particular, osteoporosis or bone diseases characterized by systemic or regional fragility.

The preparation of olpadronic acid is described in US patents 4,054,598 (1977) with foreign priority 1975, and German 26 58 961 (1978). In particular, in US patent 4,054,598 the claim refers to 1-hydroxy-3-amino-alkane-1,1-diphosphonic acids and their salts. In the specifications the preparation process of the above mentioned acids is described, but no reference is made to a particular preparation method for the corresponding pharmaceutical salts, reference being made only to the fact that said salts share the same chelating properties to react with alkaline earth ions as the acids.

A great variety of pharmaceutical products present a definite crystalline form which give them an advantage over other possible crystalline forms. The WO 96/30375 publication describes a new crystalline form of 2-methyl-4(4-methyl-1-piperazinyl)-l0H-thiene-[2,3-b] [1,5]benzodiazepine, with advantages in purity and stability compared to any other known crystalline form.

It is known that to obtain a substance in crystalline form a procedure comprising a precipitation stage is required, and that the conditions under which the precipitation of the substance is performed define the structure of said crystalline form.

It is known as well that, depending on the used method, there are substances capable of crystallizing in an anhydrous form, or as one ore more stable hydrates. A substance with a defined crystalline structure and with a definite degree of hydration may have different properties, uses and advantages with respect to the properties of another crystalline form and degree of hydration.

In Argentinian Patent AR 246,743 (1994) the method for the obtention and structural identification of sodium salt of olpadronic acid is described, without specific mention of its physicochemical characteristics, hydration degree nor crystalline form. The product obtained in said patent has a 2.2 % humidity that does not correspond to a hydrate.

In U.S. Patent 4,711,880 (filed September 8, 1986) and EP 0 177 443 (both to the same applicant) a novel crystalline form of disodium 3-amino-1-hydroxypropane-1,1-diphosphonate pentahydrate (pamidronate) and the process for the manufacture are described.

WO 96/19998 describes methods for bone mass anabolic preservation using bisphosphonates formulations wherein the bone mass anabolic composition contains effective non-toxic doses of [3-(N,N-dimethylamine)-1-hydroxypropylidene]-bisphosphonic acid (olpadronate) or the monosodium or other pharmaceutically acceptable salt thereof. This document only discloses non-crystalline forms of monosodium olpadronate which additionally are not hydrates and therefore are distinct from the present invention.

One object of the present invention is to provide for a crystalline form of olpadronate which is more stable than the forms as described in the prior art in order to enable an optimum for human medical use.

This object is perfectly met by the monosodium salt of the olpadronic acid, with one molecule of crystallization water, designated herein as crystalline form a and defined in more detail hereinafter. Another object of the present invention is a procedure for the obtention of said crystalline form of the monohydrate monosodium salt of the N,N-dimethyl-3-amino-1-hydroxypropan-1,1-diphosphonic acid, comprising the dissolution of olpadronic acid in an aqueous solution containing 0.95 to 1.1 equivalents of sodium hydroxide. This solution, which contains approximately 40 to 50 grams of monosodium salt for each 100 grams of water, is added slowly, at a temperature between 40 and 55°C, over a volume of an organic solvent miscible with water, i.e. acetone or an alcohol having 1 to 4 carbons, which is from 2 to 5 times the volume of the aqueous solution.

The invention is also directed to a pharmaceutical preparation intended for oral, parenteral or topic administration to humans or warm blooded animals containing the compound according to the invention. Oral formulations as tablet, reconstituted powder, syrup or aqueous solutions are preferred.

### Description of the Olpadronate form A

The present invention refers to a crystalline form (named "A") of the monosodium monohydrate salt of N,N-dimethyl-3-amino-1-hydroxypropan-1,1-diphosphonic acid which is characterized by the following X ray diffraction pattern, using the powder dispersion method with Cu K alpha radiation:

| **Angle (20)** | **d (spacing) (Å)** | **Relative Int. (%)** |
|---|---|---|
| 5.150 | 17.1456 | 1.3 |
| 7.975 | 11.0773 | 100.0 |
| 10.165 | 8.6951 | 3.2 |
| 10.770 | 8.2080 | 19.2 |
| 13.220 | 6.6918 | 0.6 |
| 14.820 | 5.9728 | 0.6 |
| 16.020 | 5.5280 | 13.6 |
| 17.235 | 5.1409 | 10.4 |
| 17.520 | 5.0579 | 1.4 |
| 18.515 | 4.7883 | 11.2 |
| 10.090 | 4.6453 | 13.9 |
| 19.445 | 4.5613 | 1.6 |
| 20.475 | 4.3341 | 23.8 |
| 21.650 | 4.1015 | 2.9 |
| 22.635 | 3.9252 | 2.0 |
| 22.800 | 3.8971 | 2.2 |
| 23.505 | 3.7818 | 5.9 |
| 23.965 | 3.7103 | 4.0 |
| 26.290 | 3.3872 | 17.6 |
| 26.690 | 3.3373 | 18.8 |
| 28.320 | 3.1488 | 1.3 |
| 29.130 | 3.0631 | 6.3 |
| 29.400 | 3.0356 | 2.9 |
| 29.905 | 2.9854 | 1.3 |
| 30.300 | 2.9474 | 4.3 |
| 30.965 | 2.8856 | 7.9 |
| 31.800 | 2.8117 | 2.1 |
| 32.400 | 2.7610 | 5.2 |
| 32.785 | 2.7295 | 2.7 |
| 33.475 | 2.6748 | 1.5 |
| 33.860 | 2.6452 | 2.8 |
| 34.180 | 2.6212 | 3.2 |
| 34.515 | 2.5965 | 1.8 |
| 34.940 | 2.5659 | 2.1 |
| 36.090 | 2.4867 | 4.3 |
| 37.140 | 2.4188 | 7.9 |
| 37.585 | 2.3912 | 3.6 |
| 37.975 | 2.3675 | 1.9 |
| 38.795 | 2.3193 | 1.3 |
| 39.565 | 2.2760 | 2.0 |
| 40.335 | 2.2343 | 1.1 |
| 40.780 | 2.2109 | 2.9 |
| 41.120 | 2.1934 | 1.6 |
| 41.525 | 2.1729 | 1.7 |
| 42.000 | 2.1495 | 0.9 |
| 42.860 | 2.1083 | 1.5 |
| 43.295 | 2.0881 | 1.3 |
| 44.040 | 2.0545 | 2.9 |
| 44.535 | 2.0328 | 3.6 |
| 45.795 | 1.9798 | 2.9 |
| 46.435 | 1.9540 | 1.1 |
| 46.925 | 1.9347 | 0.7 |
| 48.085 | 1.8907 | 0.7 |
| 48.800 | 1.8647 | 1.0 |

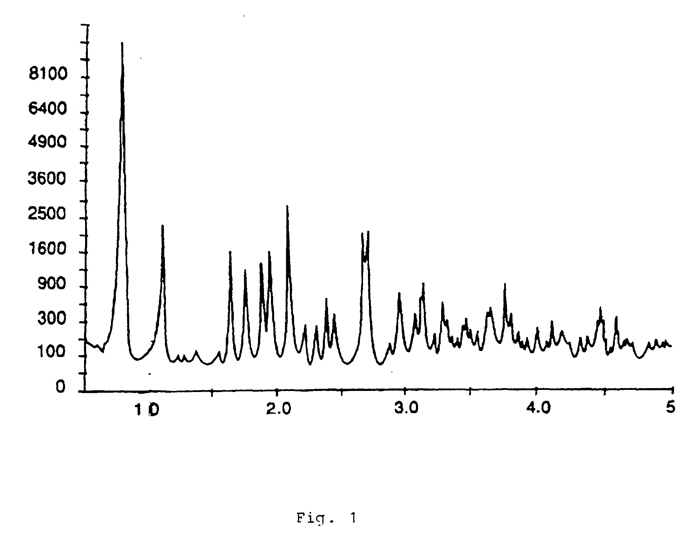

For a better visualization, we include in Fig. 1 the diffraction spectrum corresponding to this same substance.

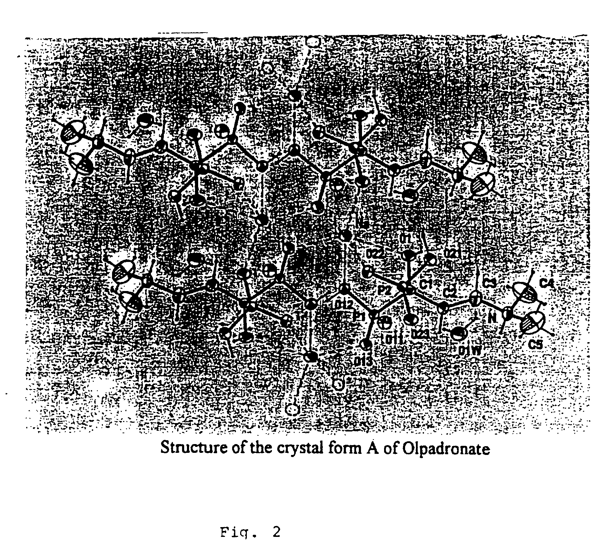

In Figure 2, the spatial distribution of the molecules in the crystalline net is shown.

### Process to obtain Olpadronate form A

Merely as non-limitative example, we include a detailed procedure in order to show the operating possibilities of the process to obtain the crystalline form of the above described monosodium monohydrate salt.

Example 1: Water (26 liters) is placed in a a 50 liter capacity reactor, and sodium hydroxide (1.49 kg) is added - under stirring.

When all the sodium hydroxide has dissolved, the olpadronic acid (10 kg) is added, and the mixture is heated to 70 - 80°C, with constant stirring, until the acid is totally dissolved.

At this stage, the pH of the solution must be controlled, according to the following control process:
Pipet 3 ml of the solution contained in the reactor.
Dilute to 100 ml with water.
Measure the pH.

The pH value should be between 3.9 and 4.1, at room temperature.

If the pH is below 3.9, portions of a 15 % w/v solution of sodium hydroxide in water should be added.

Repeat the control process after each addition.

Once the pH lies within the determined range, this solution is loaded into the loading ampul of a 200 liter reactor.

Methanol (110 liters) is added to the reactor, and heated to 40 - 45°C.

Thereafter, slowly and with constant stirring, the aqueous solution is added to the loading ampul in a period of about 3 hours, maintaining the temperature between 40 - 45°C.

Once the addition of the aqueous solution is completed, continue stirring, maintaining the temperature for 30 minutes, cool until the temperature reaches 15°C, and continue stirring at this temperatures for one hour.

The solid obtained is then filtered, washed with cold methanol (2 x 6 liters) and dried at 60°C under an air current until constant weight.

11.1 kg (96 %) of colorless crystals of the monohydrate monosodium salt of the olpadronic acid in crystalline "A" form are obtained.
Chemical titer (acidimetry): more than 97 %.
Loss on drying: between 5.5 and 6.5 %.
Calculation for monohydrate: 5.9 %.
Residual solvents (methanol): 0.1 %.
pH (1 % w/v solution): 3.6 - 4.6.
IR (KBr) (cm⁻¹): 3300 - 2800 (-OH and -NH), 2400 - 2200 (P-O-H), 1169 and 1157 (C-OH tertiary), 1063 and 1036 and 982 [C- (OH) PO₂- and C- (OH)₂P=0].
C¹³-NMR (D₂O/D₂SO₄) (ppm): 27.85 (s) (C2); 43.16 (s) (CH₃NH-CH₃); 53.85 (t, J=7 Hz) (C3); 71.57 (t, J=148 Hz) (C 1).

Preliminary tests have shown a significantly improved stability of the olpadronate cristalline form of this invention.

## Claims

1. A crystalline form of the monohydrate monosodium salt of the N,N-dimethyl-3-amino-1-hydroxypropane-1,1-diphosphonic acid, **characterized by** presenting the following X ray diffraction pattern, by the powder dispersion method with Cu K alpha radiation
| **Angle (20)** | **d (spacing) (Å)** | **Relative Int. (%)** |
|---|---|---|
| 5.150 | 17.1456 | 1.3 |
| 7.975 | 11.0773 | 100.0 |
| 10.165 | 8.6951 | 3.2 |
| 10.770 | 8.2080 | 19.2 |
| 13.220 | 6.6918 | 0.6 |
| 14.820 | 5.9728 | 0.6 |
| 16.020 | 5.5280 | 13.6 |
| 17.235 | 5.1409 | 10.4 |
| 17.520 | 5.0579 | 1.4 |
| 18.515 | 4.7883 | 11.2 |
| 10.090 | 4.6453 | 13.9 |
| 19.445 | 4.5613 | 1.6 |
| 20.475 | 4.3341 | 23.8 |
| 21.650 | 4.1015 | 2.9 |
| 22.635 | 3.9252 | 2.0 |
| 22.800 | 3.8971 | 2.2 |
| 23.505 | 3.7818 | 5.9 |
| 23.965 | 3.7103 | 4.0 |
| 26.290 | 3.3872 | 17.6 |
| 26.690 | 3.3373 | 18.8 |
| 28.320 | 3.1488 | 1.3 |
| 29.130 | 3.0631 | 6.3 |
| 29.400 | 3.0356 | 2.9 |
| 29.905 | 2.9854 | 1.3 |
| 30.300 | 2.9474 | 4.3 |
| 30.965 | 2.8856 | 7.9 |
| 31.800 | 2.8117 | 2.1 |
| 32.400 | 2.7610 | 5.2 |
| 32.785 | 2.7295 | 2.7 |
| 33.475 | 2.6748 | 1.5 |
| 33.860 | 2.6452 | 2.8 |
| 34.180 | 2.6212 | 3.2 |
| 34.515 | 2.5965 | 1.8 |
| 34.940 | 2.5659 | 2.1 |
| 36.090 | 2.4867 | 4.3 |
| 37.140 | 2.4188 | 7.9 |
| 37.585 | 2.3912 | 3.6 |
| 37.975 | 2.3675 | 1.9 |
| 38.795 | 2.3193 | 1.3 |
| 39.565 | 2.2760 | 2.0 |
| 40.335 | 2.2343 | 1.1 |
| 40.780 | 2.2109 | 2.9 |
| 41.120 | 2.1934 | 1.6 |
| 41.525 | 2.1729 | 1.7 |
| 42.000 | 2.1495 | 0.9 |
| 42.860 | 2.1083 | 1.5 |
| 43.295 | 2.0881 | 1.3 |
| 44.040 | 2.0545 | 2.9 |
| 44.535 | 2.0328 | 3.6 |
| 45.795 | 1.9798 | 2.9 |
| 46.435 | 1.9540 | 1.1 |
| 46.925 | 1.9347 | 0.7 |
| 48.085 | 1.8907 | 0.7 |
| 48.800 | 1.8647 | 1.0 |

2. A process to prepare the crystalline form of the monosodium monohydrate salt of the N,N-dimethyl-3-amino-1-hydroxypropane-1,1-diphosphonic acid according to claim 1, **characterized by** comprising the steps of: slowly pouring a solution containing between 40 and 50 g of monosodium salt of the N,N-dimethyl- 3-amino-1-hydroxypropan-1,1-diphosphonic acid for each 100 g of water on a volume of an organic solvent miscible with water, selected from acetone and an alcohol of 1 to 4 carbon atoms, between 2 and 5 times the volume of the aqueous solution, at a temperature in the range of 40 and 55°C.

3. The process according to claim 2, **characterized in that** the alcohol is methyl alcohol.

4. A pharmaceutical preparation intended for oral, parenteral, or topic administration to humans or warm-blooded animals, containing a compound according to claim 1 or a compound produced by the process according to claims 2 or 3.

## Patentansprüche

1. Eine kristalline Form des Mononatrium-monohydratsalzes der N,N-Dimethyl-3-amino-1-hydroxypropan-1,1-diphosphonsäure, **dadurch gekennzeichnet, daß** sie das folgende Röntgenbeugungsdiagramm aufweist, mittels des Pulverdispersionsverfahrens mit Cu-Kalpha-Bestrahlung:
| **Winkel (20)** | **d (Abstand) (Å)** | **Relative Int. (%)** |
|---|---|---|
| 5.150 | 17.1456 | 1.3 |
| 7.975 | 11.0773 | 100.0 |
| 10.165 | 8.6951 | 3.2 |
| 10.770 | 8.2080 | 19.2 |
| 13.220 | 6.6918 | 0.6 |
| 14.820 | 5.9728 | 0.6 |
| 16.020 | 5.5280 | 13.6 |
| 17.235 | 5.1409 | 10.4 |
| 17.520 | 5.0579 | 1.4 |
| 18.515 | 4.7883 | 11.2 |
| 10.090 | 4.6453 | 13.9 |
| 19.445 | 4.5613 | 1.6 |
| 20.475 | 4.3341 | 23.8 |
| 21.650 | 4.1015 | 2.9 |
| 22.635 | 3.9252 | 2.0 |
| 22.800 | 3.8971 | 2.2 |
| 23.505 | 3.7818 | 5.9 |
| 23.965 | 3.7103 | 4.0 |
| 26.290 | 3.3872 | 17.6 |
| 26.690 | 3.3373 | 18.8 |
| 28.320 | 3.1488 | 1.3 |
| 29.130 | 3.0631 | 6.3 |
| 29.400 | 3.0356 | 2.9 |
| 29.905 | 2.9854 | 1.3 |
| 30.300 | 2.9474 | 4.3 |
| 30.965 | 2.8856 | 7.9 |
| 31.800 | 2.8117 | 2.1 |
| 32.400 | 2.7610 | 5.2 |
| 32.785 | 2.7295 | 2.7 |
| 33.475 | 2.6748 | 1.5 |
| 33.860 | 2.6452 | 2.8 |
| 34.180 | 2.6212 | 3.2 |
| 34.515 | 2.5965 | 1.8 |
| 34.940 | 2.5659 | 2.1 |
| 36.090 | 2.4867 | 4.3 |
| 37.140 | 2.4188 | 7.9 |
| 37.585 | 2.3912 | 3.6 |
| 37.975 | 2.3675 | 1.9 |
| 38.795 | 2.3193 | 1.3 |
| 39.565 | 2.2760 | 2.0 |
| 40.335 | 2.2343 | 1.1 |
| 40.780 | 2.2109 | 2.9 |
| 41.120 | 2.1934 | 1.6 |
| 41.525 | 2.1729 | 1.7 |
| 42.000 | 2.1495 | 0.9 |
| 42.860 | 2.1083 | 1.5 |
| 43.295 | 2.0881 | 1.3 |
| 44.040 | 2.0545 | 2.9 |
| 44.535 | 2.0328 | 3.6 |
| 45.795 | 1.9798 | 2.9 |
| 46.435 | 1.9540 | 1.1 |
| 46.925 | 1.9347 | 0.7 |
| 48.085 | 1.8907 | 0.7 |
| 48.800 | 1.8647 | 1.0 |

2. Verfahren zur Herstellung der kristallinen Form des Mononatrium-monohydratsalzes der N,N-Dimethyl-3-amino-1-hydroxypropan-1,1-diphosphonsäure nach Anspruch 1, **dadurch gekennzeichnet, daß** es die Schritte umfaßt: Langsames Gießen einer Lösung, enthaltend zwischen 40 und 50 g des Mononatriumsalzes der N,N-Dimethyl-3-amino-1-hydroxypropan-1,1-diphosphonsäure pro 100 g Wasser, zu einem Volumen eines organischen Lösungsmittels, das mit Wasser mischbar ist, ausgewählt aus Aceton und einem Alkohol mit 1 bis 4 Kohlenstoffatomen, das zwischen 2 und 5 mal das Volumen der wäßrigen Lösung hat, bei einer Temperatur im Bereich von 40 und 55°C.

3. Verfahren nach Anspruch 2, **dadurch gekennzeichnet, daß** der Alkohol Methylalkohol ist.

4. Pharmazeutische Zubereitung, vorgesehen zur oralen, parenteralen oder topischen Verabreichung an Menschen oder warmblütige Tiere, enthaltend eine Verbindung nach Anspruch 1 oder eine Verbindung, hergestellt durch das Verfahren nach Ansprüchen 2 oder 3.

## Revendications

1. Forme cristalline du sel monosodique monohydraté de l'acide N,N-diméthyl-3-amino-1-hydroxypropane-1,1-diphosphonique, **caractérisée en ce qu'**elle présente le diagramme de diffraction suivant des rayons X, par la méthode de dispersion des poudres avec la radiation alpha de Cu K
| Angle (20) | D(distance réticulaire) (⊕) | Int. Relative (%) |
|---|---|---|
| 5,150 | 17,1456 | 1,3 |
| 7,975 | 11,0773 | 100,0 |
| 10,165 | 8,6951 | 3,2 |
| 10,770 | 8,2080 | 19,2 |
| 13,220 | 6,6918 | 0,6 |
| 14,820 | 5,9728 | 0,6 |
| 16,020 | 5,5280 | 13,6 |
| 17,235 | 5,1409 | 10,4 |
| 17,520 | 5,0579 | 1,4 |
| 18,515 | 4,7883 | 11,2 |
| 10,090 | 4,6453 | 13,9 |
| 19,445 | 4,5613 | 1,6 |
| 20,475 | 4,3341 | 23,8 |
| 21,650 | 4,1015 | 2,9 |
| 22,635 | 3,9252 | 2,0 |
| 22,800 | 3,8971 | 2,2 |
| 23,505 | 3,7818 | 5,9 |
| 23,965 | 3,7103 | 4,0 |
| 26,290 | 3,3872 | 17,6 |
| 26,690 | 3,3373 | 18,8 |
| 28,320 | 3,1488 | 1,3 |
| 29,130 | 3,0631 | 6,3 |
| 29,400 | 3,0356 | 2,9 |
| 29,905 | 2,9854 | 1,3 |
| 30,300 | 2,9474 | 4,3 |
| 30,965 | 2,8856 | 7,9 |
| 31,800 | 2,8117 | 2,1 |
| 32,400 | 2,7610 | 5,2 |
| 32,785 | 2,7595 | 2,7 |
| 33,475 | 2,6748 | 1,5 |
| 33,860 | 2,6452 | 2,8 |
| 34,180 | 2,6212 | 3,2 |
| 34,515 | 2,5965 | 1,8 |
| 34,940 | 2,5659 | 2,1 |
| 36,090 | 2,4867 | 4,3 |
| 37,140 | 2,4188 | 7,9 |
| 37,585 | 2,3912 | 3,6 |
| 37,975 | 2,3675 | 1,9 |
| 38,795 | 2,3193 | 1,3 |
| 39,565 | 2,2760 | 2,0 |
| 40,335 | 2,2343 | 1,1 |
| 40,780 | 2,2109 | 2,9 |
| 41,120 | 2,1934 | 1,6 |
| 41,525 | 2,1729 | 1,7 |
| 42,000 | 2,1495 | 0,9 |
| 42,860 | 2,1083 | 1,5 |
| 43,295 | 2,0881 | 1,3 |
| 44,040 | 2,0545 | 2,9 |
| 44,535 | 2,0328 | 3,6 |
| 45,795 | 1,9798 | 2,9 |
| 46,435 | 1,9540 | 1,1 |
| 46,925 | 1,9347 | 0,7 |
| 48,085 | 1,8907 | 0,7 |
| 48,800 | 1,8647 | 1,0 |

2. Procédé de préparation de la forme cristalline du sel monosodique monohydraté de l'acide N,N-diméthyl-3-amino-1-hydroxypropane-1,1-diphosphonique selon la revendication 1, **caractérisé en ce qu'**il comprend les étapes de : verser lentement une solution contenant entre 40 et 50 g de sel monosodique de l'acide N,N-diméthyl-3-amino-1-hydroxypropane-1,1-diphosphonique par 100 g d'eau sur un volume d'un solvant organique miscible à l'eau, choisi parmi l'acétone et un alcool de 1 à 4 atomes de carbone, entre 2 et 5 fois le volume de la solution aqueuse, à une température dans l'intervalle de 40 à 55°C.

3. Procédé selon la revendication 2, **caractérisé en ce que** l'alcool est l'alcool méthylique.

4. Préparation pharmaceutique destinée à l'administration orale, parentérale ou topique à l'homme ou aux animaux à sang chaud, contenant un composé selon la revendication 1 ou un composé produit par le procédé selon la revendication 2 ou 3.
